# EUROPEAN PATENT APPLICATION

(11) **EP 3 561 663 A1**
(43) Date of publication of application: **30.10.2019**
(21) Application number: 18000392.3
(22) Date of filing: 24.04.2018
(51) Int. Cl.: G06F 8/30, G06F 7/58

(54) **STATISTICAL BOOTSTRAPPING ALGORITHM FOR DATA COMPRESSION**

(71) Applicant: Scharrer, Christian, 90765 Fürth, Bayern (DE)
(72) Inventor: Scharrer, Christian, 90765 Fürth, Bayern (DE)

(57) **Abstract**

Java.lang.math.normalize is a proposal for inclusion in the Java standard library. Its purpose is to condense and consequentially elongate data amounts. This principle is known from "dated programs" like WinZip, in general data compression. Such algorithms are still in constant use for anything that affects cryptography, data storage, data compression, calculation of statistical and stochastic ratios and much more.

Despite the vast abundance of storage capacity and computation power in this world, efficient and fast algorithms are as vital as before given that transmission speed is now the additional variable in getting programs work quickly.

From an economic perspective such algorithms reduce (a) storage memory which were otherwise wasted and (b) they leave less defragmented data. Both effects, (a) and (b), reduce cost and increase efficiency. Henceforth, my patent claim is not only technically viable, it is also economically a real business case.

## Description

The below given source code in Java serves to normalize random number generated data following any type of statistical distribution, usually gaussian.
The purpose of the method normalize is to strap the random number generated set for sheding light on data clusters that are otherwise too crowded for mathematical analysis. Similar approaches are being undertaken by so-called bootstrapping mathematical approaches.

**Keywords:** normalization, random, bootstrap, data, cluster

**Science:** Mathematics, Computer Science

### Java Sourcecode:

```
 import java.lang.math;
 public class RNGeqDtd
 {
   int v;
   public static void Random()
   {for (v>0; v++; v<1000000)
       {
            Random rnd = new Random();
            v = rnd.setSeed(seed);
            ResArr[] = v;
            Console.out.writeline("detailed RNG ": ResArr[]);
            }}}
            public class Normalize
            {
   public int w;
   private static void NormalizeEqW()
   {
       w.Random(v) * (1 / Random.of(v).sum()) = w;
   }ArrRNEqW[] = w;
   }
```

## Claims

1. What is new and why my developed method java.lang.math.normalize should become part of the java.lang.math library is its efficient algorithm minimizing computation time in contrast to for example similar algorithms being used in Microsoft Excel.

2. What is new and why my developed method java.lang.math.normalize should become part of the java.lang.math library is the fact that it reduces residual memory capacity, i.e. less fragmented data.
